# EUROPEAN PATENT SPECIFICATION

(11) **EP 4 242 749 B1**
(45) Date of publication and mention of the grant of the patent: **01.01.2025**
(21) Application number: 23183818.6
(22) Date of filing: 01.11.2019
(51) Int. Cl.: H04N 1/23, H04N 1/00, H04N 1/12, G03G 15/00, G03G 21/04

(54) **BELT TRANSFER-TYPE MULTIFUNCTION DEVICE AND METHOD FOR CONTROLLING SAME**
MULTIFUNKTIONSVORRICHTUNG MIT RIEMENÜBERTRAGUNG UND VERFAHREN ZU DEREN STEUERUNG
DISPOSITIF MULTIFONCTION DE TYPE TRANSFERT À COURROIE ET SON PROCÉDÉ DE COMMANDE

(30) Priority: 01.11.2018 KR 20180133119
(43) Date of publication of application: 13.09.2023
(62) Divisional of application: 19879634.4
(73) Proprietor: Lee, Myung Shin, Seongnam-si, Gyeonggi-do 13469 (KR)
(72) Inventor: Lee, Myung Shin, Seongnam-si, Gyeonggi-do 13469 (KR)
(74) Representative: Müller Hoffmann & Partner

(56) References cited:
- WO-A1-2017/047851
- WO-A2-2011/129556
- KR-A- 20090 120 300
- KR-A- 20120 116 067
- KR-A- 20130 020 019
- US-A1- 2016 321 527

## Description

### [Technical Field]

The present disclosure relates to a belt transfer type multi-function device and a control method thereof, and more particularly, to a belt transfer type multi-function device including a security paper detection sensor to discriminately print security paper and plain paper and to output plain paper as blank paper, and a control method thereof. In the present disclosure, the multi-function device includes even a device that implements only an individual function of a printer, a fax machine, a copier, and a scanner, as well as a multi-function device incorporating the functions of a printer, a fax machine, a copier, and a scanner.

### [Background Art]

Recently, with the rapid development of enterprises, security measures against document leakage of enterprises have been devised. In recent years, as security measures against document leakage, a document security technology employing security paper has been developed. Security paper refers to paper printed by inserting a special material therein or by using a special material, which generates a signal for distinguishing between characteristics of materials by resonating to a specific frequency using an amorphous or similar non-crystalline magnetic material (alloy), a metal wire in nanoscale, and a material having magnetic resonance characteristics.

Such security paper is detected by an electromagnetic (EM) sensor. That is, when a soft magnetic material in the security paper approaches an alternating current (AC) magnetic field generated by the sensor, the AC magnetic field changes, and a high frequency spectrum generated due to the change is detected to detect the security paper. The sensor may include a transmission coil generating an AC magnetic field, a reception coil detecting a change in the AC magnetic field generated by the transmission coil, and an electronic system controlling the AC magnetic field generated by the transmission coil and processing a signal received from the reception coil.

Alternatively, security paper may include a plurality of conductive fine metal pieces irregularly distributed throughout the paper. The fine metal piece may be any type of metal as long as it has conductivity and generates an induced current in a magnetic field. For example, the metal piece contained in the paper may have a fine size so that it is not easily identified by the naked eyes of a user. For example, the metal piece may be a metal piece having a thickness of 0.1 µm to 3 µm, a length of 0.3 cm to 4 cm, and a width of 0.1 mm to 0.5 mm. As such, with the security paper in which the conductive fine metal pieces are scattered, a primary magnetic field generated by an inductive sensor induces an eddy current in the fine metal pieces of a fed paper, and a magnetic field secondarily generated by the eddy current affects the primary magnetic field generated by the inductive sensor to change intensity thereof. Accordingly, the inductive sensor transmits a security paper detection signal to a control device to be described later according to whether intensity of the magnetic field generated by the inductive sensor itself changes.

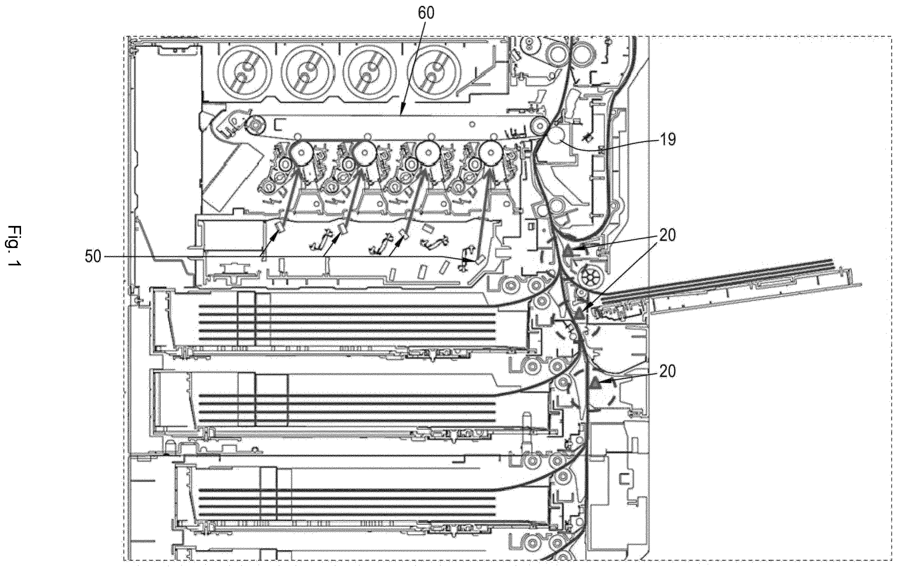

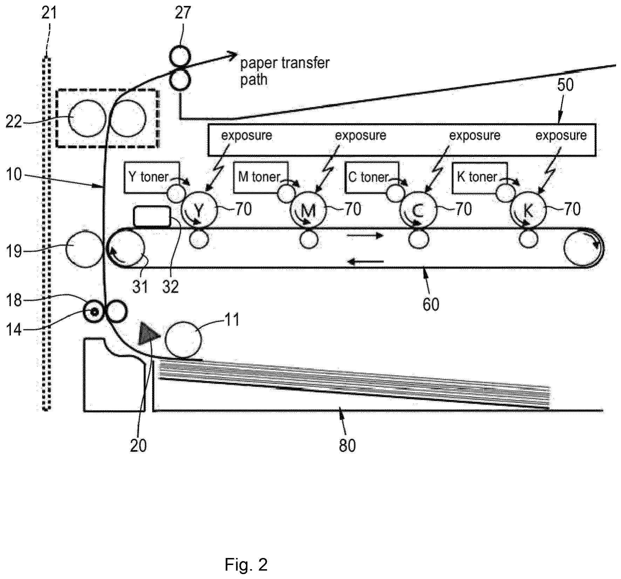

FIGS. 1 and 2 are diagrams illustrating a background art of the present disclosure regarding a belt transfer type multi-function device that may be applied to a multi-function device for security paper. A general process of printing paper in a belt transfer type multi-function device will be described with reference to FIGS. 1 and 2. Once printing starts, a laser scanner unit (LSU) 50 irradiates a laser to an OPC drum 70 according to an image to be printed, to form an image on the OPC drum 70, the OPC drum 70 on which the image is formed comes into contact with a roller to which a toner is attached, and the toner is attached only to a portion of the OPC drum 70 in which the image is formed due to a potential difference between voltages applied to the roller and the drum. The OPC drum 70 to which the toner is attached comes into contact with a transfer belt 60 so that the toner attached to the OPC drum 70 is moved to the transfer belt 60 due to a potential difference applied between the OPC drum 70 and the transfer belt 60. For example, in the case of a color printer, each color toner is moved to the transfer belt 60 in order of yellow (Y), magenta (M), cyan (C), and black (K). For reference, the order of the colors may differ depending on a multi-function device maker. The toner moved to the transfer belt 60 meets the paper lifted from a feeding device between the transfer belt 60 and a transfer roller 19 according to a rotational motion of the transfer belt 60, and as the toner of the transfer belt 60 is moved to a paper 10 according to a potential difference between the transfer belt 60 and the transfer roller 19, an image is formed on the paper 10. As the paper 10 on which the image has been formed by the toner passes through a fuser unit 22, the toner is fused to the paper 10 by heat, thereby finishing a final printing process.

In the printing process of the belt transfer type multi-function device described above, printing is first performed (image is formed) on the transfer belt 60 before the paper 10 is picked up by a pickup roller 11 in a paper tray 80, and in both a case in which the security paper detection sensor 20 is installed in the paper tray 80 and a case in which the security paper detection sensor 20 is installed on a transfer path of the paper 10 as shown in FIG. 2, whether the paper 10 is a security paper or a plain paper may be detected only when the paper 10 is picked up and the picked-up paper is moved from the transfer path. Here, there is no particular problem when the security paper is detected, but when the plain paper is detected, there is a problem in that the image formed on the transfer belt 60 is already transferred to the plain paper and printed, before being detected.

For example, WO 2017/047851 A1 discloses that a printer control unit controls a pressure roller/heating means of the fusing unit so that the toner may not settle on the printed plain paper after printing.

### [Disclosure]

### [Technical Problem]

The present invention is defined by the appended claims.

### [Advantageous Effects]

According to the present disclosure, in a case in which an image transferred to a transfer belt should not be printed on paper (next paper or plain paper) immediately before being caught between the transfer roller and a belt roller in a belt transfer type multi-function device in any event, it is possible to normally perform printing on paper (or security paper) caught between the transfer roller and the belt roller and to eject the next paper or plain paper as blank paper without being printed.

### [Description of Drawings]

FIG. 1 is a view for explaining the background art of the present disclosure in a belt transfer type multi-function device.
FIG. 2 is a view for explaining the background art of the present disclosure in a belt transfer type multi-function device.
FIG. 3 is a view illustrating a paper transfer path and plain paper ejection operation in the belt transfer type multi-function device according to an embodiment of the present disclosure.
FIG. 4 is a block diagram illustrating an operation of ejecting plain paper in a belt transfer type multi-function device according to an embodiment of the present disclosure.
FIG. 5 is a flowchart illustrating an operation of ejecting plain paper in of a belt transfer type multi-function device according to an embodiment of the present disclosure.
FIG. 6 is a view illustrating switching control for an operation of ejecting plain paper in a belt transfer type multi-function device according to an embodiment of the present disclosure.
FIG. 7 is a timing chart illustrating switching control for an operation of ejecting plain paper in a belt transfer type multi-function device according to an embodiment of the present disclosure.

### [Best Modes]

As described above, a multi-function device in the present disclosure includes not only a multi-function device incorporating functions of a printer, a fax machine, a copier, and a scanner but also a device that implements only individual functions of a printer, a fax machine, a copier, and a scanner. In general, a multi-function device refers to a device capable of implementing all the functions of a printer, a fax machine, a copier, and a scanner; however, in the present disclosure, as can be noted from the following descriptions, whether fed paper is plain paper or security paper is determined and a printing operation is performed accordingly, and thus, the multi-function device in the present disclosure may also be understood as indicating a printer, a fax machine, or a copier, not a multi-function device. That is, although a device functions only as a printer or only as a copier, if the functions described below in the present disclosure are implemented according to paper to be fed, the device will fall within the scope of the present disclosure. Alternatively, a related art multi-function device implementing all of the above functions will naturally fall within the scope of the present disclosure.

Hereinafter, an example in which security paper or plain paper is determined by a security paper detection sensor and printing is normally performed on security paper and is not performed on plain paper will be described, but the present disclosure is not limited thereto and may also be applied to a case in which an image already transferred to a transfer belt should not be printed on paper (hereinafter, referred to as "next paper" or "plain paper") immediately before being caught between a transfer roller and a belt roller in a belt transfer type multi-function device in any event. That is, printing may be normally performed on paper (which may be "security paper" according to an embodiment of the present disclosure) caught between the transfer roller and the belt roller, and next paper or plain paper, on which printing is not performed, is ejected as blank paper. In other words, the present disclosure may be applied to a case in which printing is normally performed on paper already caught between the transfer roller and the belt roller, while an image already transferred to the transfer belt should not be printed on next paper. Therefore, the scope of the present disclosure should not be limited by the description of the embodiments below but will be defined only by the claims described below.

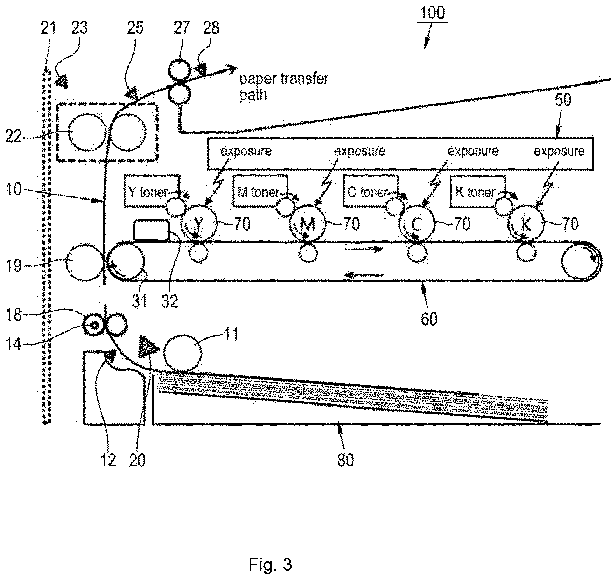

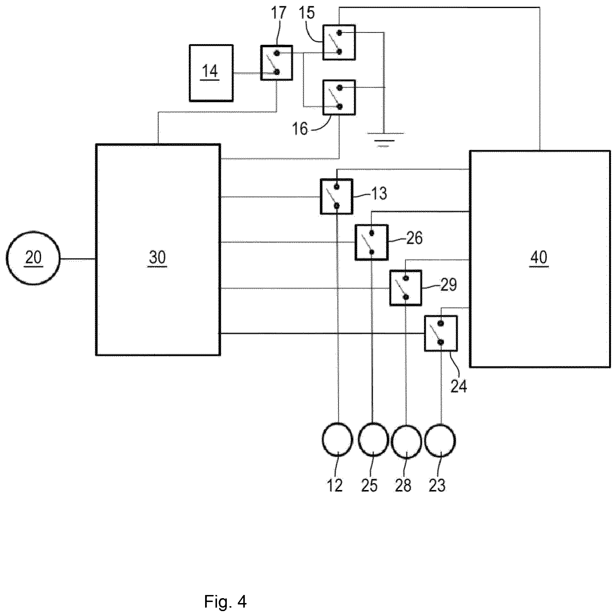

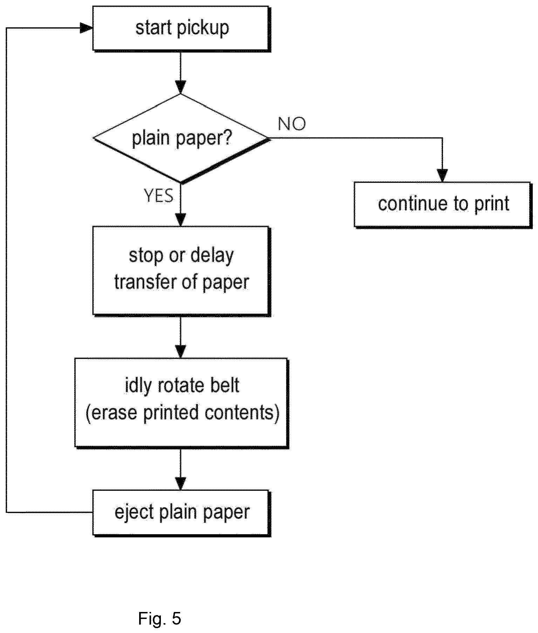

FIG. 3 is a view illustrating a paper transfer path and plain paper ejection operation in the belt transfer type multi-function device according to an embodiment of the present disclosure. FIG. 4 is a block diagram illustrating an operation of ejecting plain paper in a belt transfer type multi-function device according to an embodiment of the present disclosure. FIG. 5 is a flowchart illustrating an operation of ejecting plain paper in of a belt transfer type multi-function device according to an embodiment of the present disclosure.

Referring to FIGS. 3 to 5, a belt transfer type multi-function device 100 according to the present disclosure includes a security paper detection sensor 20 installed on a transfer path of a paper 10 and a control device 30 determining whether the paper 10 is security paper or plain paper according to a detection value from the security paper detection sensor 20. When the paper 10 is recognized as plain paper, the belt transfer type multi-function device 100 turns off a feed roller clutch 14 , and after the lapse of a predetermined time, the belt transfer type multi-function device 100 turns on the feed roller clutch 14 so that the paper 10 is output as blank paper. Hereinafter, the belt transfer type multi-function device 100 according to the present disclosure will be described in detail with reference to the accompanying drawings.

When the paper 10 is picked up by a pickup roller 11 from a paper tray 80 and transferred along a transfer path (indicating a path along which the paper, starting from the paper tray, is fed, printed and ejected from the inside of the multi-function device), the security paper detection sensor 20 located on the transfer path transmits a detection value to the control device 30 and the control device 30 compares the detection value from the security paper detection sensor 20 with a predetermined reference value to determine whether the paper 10 is security paper. According to an embodiment of the present disclosure, the control device 30 compares a first detection value detected by the security paper detection sensor 20 at a time point at which the corresponding paper 10 is not present near the security paper detection sensor 20 in the process in which the paper 10 to be determined is transferred on the transfer path with at least one second detection value detected by the security paper detection sensor 20 for the paper 10 to be determined on the transfer path, and if a comparison value is equal to or greater than the predetermined reference value, the control device 30 determines that the paper 10 is security paper, whereas if the comparison value is less than the predetermined reference, the control device 30 determines that the paper 10 is plain paper.

In some cases, the security paper detection sensor 20 may be provided in a predetermined position inside the paper tray 80 to detect whether the paper, included in the paper tray 80 and starting to be fed, is security paper or plain paper.

When the control device 30 recognizes the paper 10 as a plain paper, a feed roller clutch 14 may be turned off by firmware or the control device 30 of the belt transfer type multi-function device 100 to forcibly stop rotation of the feed roller 18. When rotation of the feed roller 18 is stopped, the transfer belt 60 continues to rotate with no paper 10 between the transfer roller 19 and the belt roller 31 so that the image already transferred to the transfer belt 60 may be automatically erased by a belt cleaner 32, while security paper (paper already caught between the transfer roller and the belt roller) in front of plain paper on the transfer path is normally printed and ejected.

In general, in a method of stopping transfer of the paper 10, if a jam signal is generated by controlling a feed sensor 12 of the belt transfer type multi-function device 100 or by processing a signal thereof or by controlling a door open sensor 23 or by processing a signal thereof, all operations of the belt transfer type multi-function device 100 may be stopped, and in this case, the front security paper, which has been normally printed, may also be stopped and damaged by heat of a fusing device (or an image printed on the security paper may be damaged). Therefore, in the present disclosure, when the firmware or the control device 30 recognizes (determines) the next paper 10, immediately before being caught between the transfer roller 19 and the belt roller 31, as plain paper, an OFF signal is forcibly generated by controlling a feed roller clutch 14 by the firmware or the control device 30 of the belt transfer type multi-function device 100 according to the present disclosure to thereby prevent a printer engine controller 40 of the belt transfer type multi-function device 100 from recognizing that the next paper 10 or plain paper is stopped, and thus, a normal printing process may be completed on the security paper (already caught between the transfer roller and the belt roller) in front of plain paper on the transfer path.

Thereafter, when a printer engine controller 40 recognizes that the door 21 is opened and then closed by controlling the door open sensor 23 (or by processing a signal thereof) (in the present disclosure, controlling a sensor includes processing a signal from the sensor) by the firmware or the control device 30 of the belt transfer type multi-function device 100 according to the present disclosure, the belt transfer type multi-function device 100 according to the present disclosure performs an initiation operation by the printer engine controller 40. Here, the printer engine controller 40 recognizes that there is no paper by controlling sensors (or by processing or controlling signals thereof) including the feed sensor 12 on the paper transfer path by the firmware or the control device 30 of the belt transfer type multi-function device 100 according to the present disclosure, and here, plain paper is normally ejected when the belt transfer type multi-function device 100 performs the initiation operation by turning on the feed roller clutch 14 by the firmware or the control device 30 of the belt transfer type multi-function device 100.

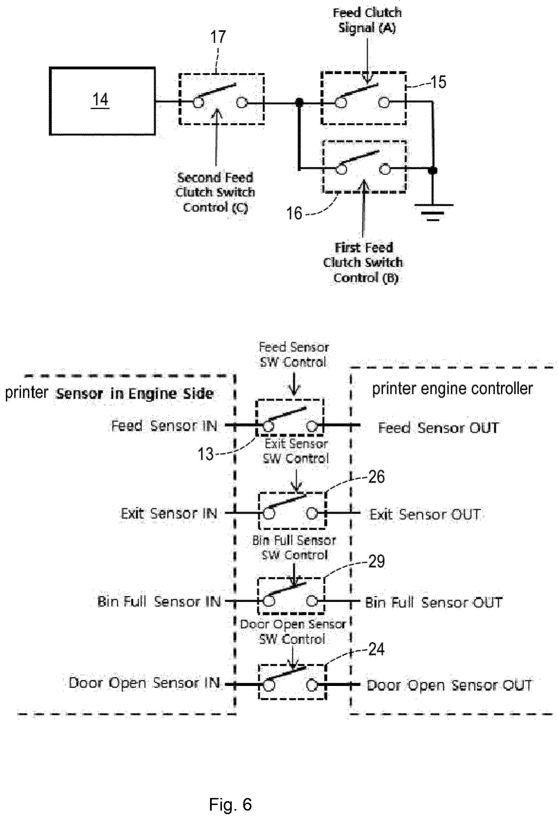

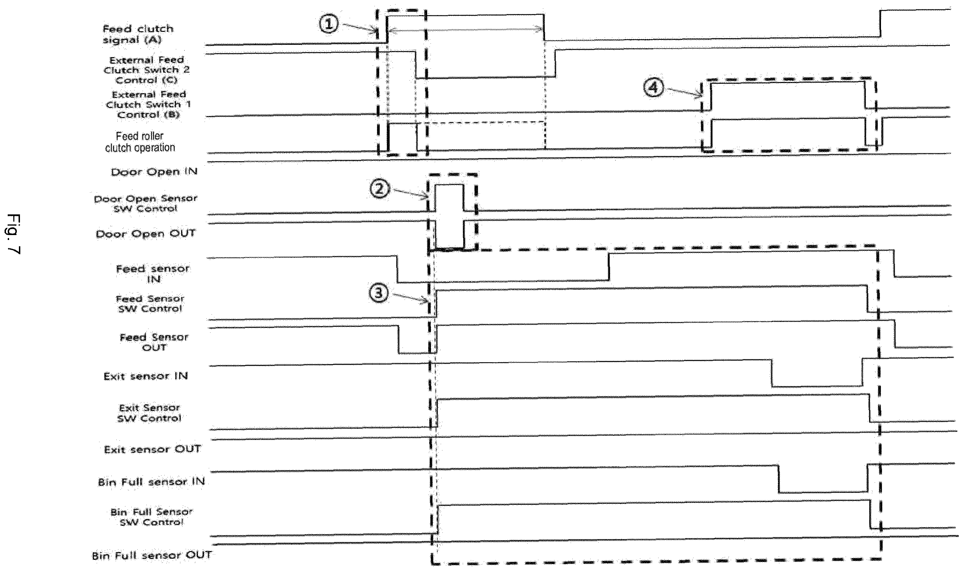

Here, in order to enable the belt transfer type multi-function device 100 according to the present disclosure to maintain the initial operation, the feed sensor 12, an exit sensor 25, a bin full sensor 29 through which plain paper passes are controlled by the firmware or the control device 30 of the belt transfer type multi-function device 100 according to the present disclosure so that the printer engine controller 40 may recognize that paper does not pass (there is no paper on the transfer path) until plain paper is ejected (alternatively, controlled by processing signals from the corresponding sensors). Details thereof will be described hereinbelow with reference to FIGS. 6 and 7.

In addition, in an embodiment of the present disclosure, a second feed clutch switch 17 connected to the feed roller clutch 14 and a printer feed clutch switch 15 and a first feed clutch switch 16 connected to the second feed clutch switch 17 are provided, and ON/OFF of the first feed clutch switch 16 and the second feed clutch switch 17 are controlled by the firmware or the control device 30 of the security multi-function device 100. Details thereof will be described hereinbelow with reference to FIGS. 6 and 7. The printer feed clutch switch 15 is controlled by the printer engine controller 40.

FIG. 6 is a view illustrating switching control for an operation of ejecting plain paper in a belt transfer type multi-function device according to an embodiment of the present disclosure, and FIG. 7 is a timing chart illustrating switching control for an operation of ejecting plain paper in a belt transfer type multi-function device according to an embodiment of the present disclosure.

An operation of controlling ON/OFF of the feed roller clutch and each sensor in the belt transfer type multi-function device 100 according to the present disclosure will be described in detail by a the timing chart with reference to FIGS. 6 and 7. In the timing chart of FIG. 7, in a section ①, the printer feed clutch switch 15 is controlled by a feed clutch signal from the printer engine controller 40 and is turned on (ON). When paper is recognized as plain paper, a second feed clutch switch control (C) is formed low by the firmware or the control device 30 of the security multi-function device 100, so that the second feed clutch switch 17 is blocked, an operation of the feed roller clutch 14 is turned off, the feed roller 18 does not rotate, and thus, paper is stopped on the transfer path.

Here, in a section of ②, when the door open sensor switch control is turned off and then turned on by the firmware or the control device 30 of the security multi-function device 100, door open OUT transferred to the printer engine controller 40 is dropped to low and then returned to high although there is no change (closed) actually in the door 21 like a state of door open IN, so that the printer engine controller 40 recognizes that the door 21 is opened and then closed, the belt transfer type multi-function device 100 starts an initialization operation (motors inside the belt transfer type multi-function device 100 are all rotated to erase the remaining image of the transfer belt 60 and the initialization operation is performed).

Here, as in the section of ③, when outputs of all sensors (feed sensor 12, exit sensor 25, and bin full sensor 28) on the paper transfer path are turned off by feed sensor switch control, exit sensor switch control, bin full sensor switch control by the firmware or the control device 30 of the security multi-function device 100 from a time point at which door open sensor switch control is dropped to low to a time point at which the initialization operation is finished, the printer engine controller 40 determines that there is no paper in spite of the presence of paper in the belt transfer type multi-function device 100 and continuously performs the initialization operation.

Here, since all the motors of the belt transfer type multi-function device 100 rotate, when a first feed clutch switch control (B) is made high by the firmware or the control device 30 of the security multi-function device 100 to turn on the first feed clutch switch 16 as in a section ④, the feed roller 18 rotates to transfer the paper 10 inside the belt transfer type multi-function device 100 to eject the paper 10 to the outside.

In the above case, all the driving motors required for transfer of the paper rotate during the initialization operation, but in some cases, some of the motors required for transfer of the paper may not rotate during the initialization operation depending on types of multi-function devices. In this case, plain paper may be ejected by transferring paper by rotating a motor which does not rotate during the initialization operation. Motors currently used in multi-function devices are mostly classified into two types of step motors and blushless DC (BLDC) motors, and the same controlling may be performed by controlling drivers thereof. Specifically, the control in the sections ① to ④ above may be followed as is, and if a motor does not rotate, a multi-function device side motor control signal may be interrupted by turning on P/S switch control, the motor may be rotated by connecting a sensor side motor control signal, whereby paper may be ejected to the outside.

The present disclosure is not limited to the specific embodiments described above and may be variously modified by a person skilled in the art.

### [Industrial Applicability]

According to the present disclosure, in a case in which an image transferred to a transfer belt should not be printed on paper (next paper or plain paper) immediately before being caught between the transfer roller and a belt roller in a belt transfer type multi-function device in any event, it is possible to normally perform printing on paper (or security paper) caught between the transfer roller and the belt roller and to eject the next paper or plain paper as blank paper without being printed.

## Claims

1. A control device (30) for a belt transfer type multi-function device (100) printing an image transferred on a belt (60) to paper moving between a transfer roller (19) and a belt roller (31),
wherein the control device (30) determines whether corresponding paper is security paper according to a detection value from a security paper detection sensor (20) installed on a transfer path of paper starting from a paper tray (80) of the belt transfer type multi-function device (100), and performs control such that security paper is normally printed and plain paper is ejected as blank paper,
wherein the control device (30) performs controlling such that an image to be printed on paper (10) already caught between the transfer roller (19) and the belt roller (31) is printed as it is, and if the control device (30) determines that next paper along a movement direction of paper is plain paper, the control device (30) performs controlling the belt transfer type multi-function device by ON/OFF switching such that movement of the next paper is stopped on the transfer path of paper before the next paper is positioned between the transfer roller (19) and the belt roller (31), the image already transferred on the transfer belt (60) is deleted in a state in which the next paper is maintained to be stopped on the transfer path of paper, and the next paper in a stopped state is ejected as a blank paper through an ejection port of printed paper along the transfer path of paper, with the image already transferred to the transfer belt (60), which is to be printed on the next paper along the movement direction of paper, being not printed on the next paper.

2. The control device (30) of claim 1, wherein the control device (30) controls the belt transfer type multi-function device by ON/OFF switching such that the next paper to be stopped from moving before being caught between the transfer roller (19) and the belt roller (31), after the next paper is picked up by a pickup roller (11).

3. The control device (30) of claim 1, wherein the belt transfer type multi-function device (100) further includes one or more of a feed roller (18) and a registration roller for correcting a skew of fed paper and a driving unit including a clutch or motor for driving the one or more rollers are provided between the pickup roller (11) and the transfer roller (19), and the control device (30) controls the driving unit of the belt transfer type multi-function device by ON/OFF switching to stop movement of the paper before the next paper is caught between transfer roller (19) and the belt roller (31).

4. The control device (30) of claim 1, wherein the control device (30) turns off a clutch (14) of the feed roller (18) so that printing is normally performed on the paper already caught between the transfer roller (19) and the belt roller (31), and the control device (30) turns on the clutch (14) of the feed roller (18) after the lapse of a predetermined time to ejection the next paper as blank paper.

5. The control device (30) of claim 4, further comprising:
a second feed clutch switch (17) connected to the clutch (14) of the feed roller (18), a printer feed clutch switch (15) connected to the second feed clutch switch (17), and a first feed clutch switch (16),
wherein the control device (30) controls ON/OFF of the first feed clutch switch (16) and the second feed clutch switch (17).

6. The control device (30) of any one of claims 1 to 5, wherein the control device (30) controls ON/OFF switching of a door open sensor switch (24), a feed sensor switch (13), an exit sensor switch (26), a bin full sensor switch (29) to control the next paper stopped from moving to be ejected as blank paper through the ejection port along a transfer path of paper.

7. The control device (30) of any one of claims 1 to 6, wherein the control device (30) compares a first detection value detected by the security paper detection sensor (20) at a time point at which there is no corresponding paper near the security paper detection sensor (20) with at least one second detection value detected by the security paper detection sensor (20) for paper to be determined on the transfer path during a process in which the paper to be determined is transferred on the transfer path, and the control device (30) determines that the corresponding paper is security paper if a comparison value is equal to or greater than a predetermined reference, and the control device (30) determines that the corresponding paper is plain paper if the comparison value is smaller than the predetermined reference.

## Patentansprüche

1. Steuerungsvorrichtung (30) für eine Multifunktionsvorrichtung (100) vom Bandübertragungstyp, die ein auf ein Band (60) übertragenes Bild auf ein Papier druckt, das sich zwischen einer Übertragungsrolle (19) und einer Bandrolle (31) bewegt,
wobei die Steuerungsvorrichtung (30) bestimmt, ob es sich bei einem entsprechenden Papier um ein Sicherheitspapier handelt, gemäß einem Detektionswert von einem Sicherheitspapier-Detektionssensor (20), der auf einem von einer Papierschale (80) der Multifunktionsvorrichtung (100) vom Bandübertragungstyp ausgehenden Papierübertragungsweg installiert ist, und eine Steuerung durchführt, so dass Sicherheitspapier normal bedruckt wird und einfaches Papier als leeres Papier ausgeworfen wird,
wobei die Steuerungsvorrichtung (30) eine Steuerung so durchführt, dass ein Bild, das auf ein schon zwischen der Übertragungsrolle (19) und der Bandrolle (31) erfasstes Papier (10) gedruckt werden soll, gedruckt wird so wie es ist, und, falls die Steuerungsvorrichtung (30) bestimmt, dass ein nächstes Papier entlang einer Papierbewegungsrichtung ein einfaches Papier ist, die Steuerungsvorrichtung (30) eine Steuerung der Multifunktionsvorrichtung vom Bandübertragungstyp mittels Ein-/AUS-Schalten durchführt, so dass eine Bewegung des nächsten Papiers auf dem Papierübertragungsweg gestoppt wird, bevor das nächste Papier zwischen der Übertragungsrolle (19) und der Bandrolle (31) positioniert ist, das auf das Übertragungsband (60) schon übertragene Bild in einem Zustand gelöscht wird, in dem das nächste Papier auf dem Papierübertragungsweg gestoppt gehalten wird, und das nächste Papier in einem gestoppten Zustand als leeres Papier durch eine Auswurföffnung für bedrucktes Papier entlang dem Papierübertragungsweg ausgeworfen wird, wobei das schon auf das Übertragungsband (60) übertragene Bild, das auf das nächste Papier entlang der Papierbewegungsrichtung gedruckt werden soll, nicht auf das nächste Papier gedruckt wird.

2. Steuerungsvorrichtung (30) nach Anspruch 1, wobei die Steuerungsvorrichtung (30) die Multifunktionsvorrichtung vom Bandübertragungstyp mittels EIN-/AUS-Schalten so steuert, dass eine Bewegung des nächsten Papiers gestoppt wird, bevor es zwischen der Übertragungsrolle (19) und der Bandrolle (31) erfasst wird, nachdem das nächste Papier mittels einer Aufnahmerolle (11) aufgenommen ist.

3. Steuerungsvorrichtung (30) nach Anspruch 1, wobei die Multifunktionsvorrichtung (100) vom Bandübertragungstyp ferner eine oder mehrere einer Zufuhrrolle (18) und einer Registrierungsrolle zum Korrigieren einer Schieflage eines zugeführten Papiers und eine Antriebseinheit, die eine Kupplung oder einen Motor zum Antreiben der einen oder der mehreren Rollen enthält, zwischen der Aufnahmerolle (11) und der Übertragungsrolle (19) vorgesehen sind und die Steuerungsvorrichtung (30) die Antriebseinheit der Multifunktionsvorrichtung vom Bandübertragungstyp mittels EIN-/AUSSchalten steuert, um eine Bewegung des Papiers zu stoppen, bevor das nächste Papier zwischen der Übertragungsrolle (19) und der Bandrolle (31) erfasst wird.

4. Steuerungsvorrichtung (30) nach Anspruch 1, wobei die Steuerungsvorrichtung (30) eine Kupplung (14) der Zufuhrrolle (18) ausschaltet, so dass ein Druckvorgang auf dem zwischen der Übertragungsrolle (19) und der Bandrolle (31) schon erfassten Papier normal durchgeführt wird, und die Steuerungsvorrichtung (30) die Kupplung (14) der Zufuhrrolle (18) nach Ablauf einer vorbestimmten Zeit einschaltet, um das nächste Papier als leeres Papier auszuwerfen.

5. Steuerungsvorrichtung (30) nach Anspruch 4, ferner aufweisend:
einen zweiten Zufuhr-Kupplungsschalter (17), der mit der Kupplung (14) der Zufuhrrolle (18) verbunden ist, einen Druckerzufuhr-Kupplungsschalter (15), der mit dem zweiten Zufuhr-Kupplungsschalter (17) verbunden ist, und einen ersten Zufuhr-Kupplungsschalter (16),
wobei die Steuerungsvorrichtung (30) EIN/AUS des ersten Zufuhr-Kupplungsschalters (16) und des zweiten Zufuhr-Kupplungsschalters (17) steuert.

6. Steuerungsvorrichtung (30) nach einem der Ansprüche 1 bis 5, wobei die Steuerungsvorrichtung (30) das EIN-/AUS-Schalten eines Sensorschalters (24) für eine offene Tür, eines Zufuhr-Sensorschalters (13), eines Exit-Sensorschalters (26) und eines Sensorschalters (29) für einen vollen Behälter steuert, um den Auswurf des nächsten Papiers, dessen Bewegung gestoppt ist, als leeres Papier durch die Auswurföffnung entlang dem Papierübertragungsweg zu steuern.

7. Steuerungsvorrichtung (30) nach einem der Ansprüche 1 bis 6, wobei die Steuerungsvorrichtung (30) einen ersten Detektionswert, der durch den Sicherheitspapier-Detektionssensor (20) zu einem Zeitpunkt detektiert wird, zu dem sich kein entsprechendes Papier nahe dem Sicherheitspapier-Detektionssensor (20) befindet, mit zumindest einem durch den Sicherheitspapier-Detektionssensor (20) detektierten zweiten Detektionswert für ein zu bestimmendes Papier auf dem Übertragungsweg während eines Prozesses vergleicht, in dem das zu bestimmende Papier auf dem Übertragungsweg übertragen wird, und die Steuerungsvorrichtung (30) bestimmt, dass es sich bei dem entsprechenden Papier um Sicherheitspapier handelt, falls ein Vergleichswert gleich einer vorbestimmten Referenz oder größer als diese ist, und die Steuerungsvorrichtung (30) bestimmt, dass es sich bei dem entsprechenden Papier um einfaches Papier handelt, falls der Vergleichswert geringer als die vorbestimmte Referenz ist.

## Revendications

1. Dispositif de commande (30) pour un dispositif multifonction de type transfert à courroie (100) imprimant une image transférée sur une courroie (60) sur un papier se déplaçant entre un rouleau de transfert (19) et un rouleau de courroie (31),
dans lequel le dispositif de commande (30) détermine si un papier correspondant est un papier de sécurité selon une valeur de détection provenant d'un capteur de détection de papier de sécurité (20) installé sur un chemin de transfert de papier commençant au niveau d'un bac à papier (80) du dispositif multifonction de type transfert à courroie (100), et réalise une commande de sorte qu'un papier de sécurité soit normalement imprimé et qu'un papier ordinaire soit éjecté sous la forme d'un papier vierge,
dans lequel le dispositif de commande (30) réalise une commande de sorte qu'une image devant être imprimée sur un papier (10) déjà pris entre le rouleau de transfert (19) et le rouleau de courroie (31) soit imprimée telle quelle, et si le dispositif de commande (30) détermine qu'un papier suivant le long d'une direction de mouvement de papier est un papier ordinaire, le dispositif de commande (30) réalise une commande du dispositif multifonction de type transfert à courroie par une commutation MARCHE/ARRÊT de sorte qu'un mouvement du papier suivant soit arrêté sur le chemin de transfert de papier avant que le papier suivant soit positionné entre le rouleau de transfert (19) et le rouleau de courroie (31), l'image déjà transférée sur la courroie de transfert (60) est supprimée dans un état dans lequel le papier suivant est maintenu pour être arrêté sur le chemin de transfert de papier, et le papier suivant dans un état arrêté est éjecté sous la forme d'un papier vierge par un orifice d'éjection de papier imprimé le long du chemin de transfert de papier, avec l'image déjà transférée sur la courroie de transfert (60), qui doit être imprimée sur le papier suivant le long de la direction de mouvement de papier, n'étant pas imprimée sur le papier suivant.

2. Dispositif de commande (30) selon la revendication 1, dans lequel le dispositif de commande (30) commande le dispositif multifonction de type transfert à courroie par une commutation MARCHE/ARRÊT de sorte que le papier suivant soit arrêté dans son déplacement avant d'être pris entre le rouleau de transfert (19) et le rouleau de courroie (31), après que le papier suivant est saisi par un rouleau de saisie (11) .

3. Dispositif de commande (30) selon la revendication 1, dans lequel le dispositif multifonction de type transfert à courroie (100) comporte en outre l'un ou plusieurs parmi un rouleau d'alimentation (18) et un rouleau d'alignement pour la correction d'un décalage de papier alimenté et une unité d'entraînement comportant un embrayage ou un moteur pour l'entraînement des un ou plusieurs rouleaux sont qui sont prévus entre le rouleau de saisie (11) et le rouleau de transfert (19), et le dispositif de commande (30) commande l'unité d'entraînement du dispositif multifonction de type transfert à courroie par une commutation MARCHE/ARRÊT pour arrêter le mouvement du papier avant que le papier suivant soit pris entre le rouleau de transfert (19) et le rouleau de courroie (31).

4. Dispositif de commande (30) selon la revendication 1, dans lequel le dispositif de commande (30) désactive un embrayage (14) du rouleau d'alimentation (18) de sorte qu'une impression soit normalement réalisée sur le papier déjà pris entre le rouleau de transfert (19) et le rouleau de courroie (31), et le dispositif de commande (30) active l'embrayage (14) du rouleau d'alimentation (18) après l'écoulement d'un temps prédéterminé pour l'éjection du papier suivant sous la forme d'un papier vierge.

5. Dispositif de commande (30) selon la revendication 4, comprenant en outre :
un deuxième commutateur d'embrayage d'alimentation (17) relié à l'embrayage (14) du rouleau d'alimentation (18), un commutateur d'embrayage d'alimentation d'imprimante (15) relié au deuxième commutateur d'embrayage d'alimentation (17), et un premier commutateur d'embrayage d'alimentation (16),
dans lequel le dispositif de commande (30) commande en MARCHE/ARRÊT le premier commutateur d'embrayage d'alimentation (16) et le deuxième commutateur d'embrayage d'alimentation (17).

6. Dispositif de commande (30) selon l'une des revendications 1 à 5, dans lequel le dispositif de commande (30) commande la commutation MARCHE/ARRÊT d'un commutateur de capteur d'ouverture de porte (24), d'un commutateur de capteur d'alimentation (13), d'un commutateur de capteur de sortie (26), d'un commutateur de capteur de bac plein (29) pour commander le papier suivant arrêté dans son déplacement afin qu'il soit éjecté sous la forme d'un papier vierge par l'orifice d'éjection le long d'un chemin de transfert de papier.

7. Dispositif de commande (30) selon l'une des revendications 1 à 6, dans lequel le dispositif de commande (30) compare une première valeur de détection détectée par le capteur de détection de papier de sécurité (20) à un instant auquel il n'y a pas de papier correspondant près du capteur de détection de papier de sécurité (20) avec au moins une deuxième valeur de détection détectée par le capteur de détection de papier de sécurité (20) pour un papier devant être déterminé sur le chemin de transfert pendant un processus au cours duquel le papier devant être déterminé est transféré sur le chemin de transfert, et le dispositif de commande (30) détermine que le papier correspondant est un papier de sécurité si une valeur de comparaison est égale ou supérieure à une référence prédéterminée, et le dispositif de commande (30) détermine que le papier correspondant est un papier ordinaire si la valeur de comparaison est inférieure à la référence prédéterminée.
